# EUROPEAN PATENT SPECIFICATION

(11) **EP 1 541 617 B1**
(45) Date of publication and mention of the grant of the patent: **21.02.2007**
(21) Application number: 04028980.3
(22) Date of filing: 07.12.2004
(51) Int. Cl.: C08J 5/06, C08J 5/08, D06M 15/227, D06M 15/233, D06M 15/41, C03C 25/28, C03C 25/34

(54) **Fiber for reinforcing rubber products**
Faser für die Verstärkung von Kautschukprodukten
Fibre pour renforcer des produits de caoutchouc

(30) Priority: 12.12.2003 JP 2003414153
(43) Date of publication of application: 15.06.2005
(73) Proprietor: Fiber Glass Japan Kabushiki Kaisha, Chiyoda-ku Tokyo 101-0045 (JP)
(72) Inventor: Ando, Kimihiro, 3-6-3 Kanda-kaji-cho Chiyoda-ku Tokyo (JP)
(74) Representative: Hartz, Nikolai

(56) References cited:
- GB-A- 1 175 651
- US-A- 3 844 821
- US-A- 3 855 168
- US-A- 3 925 286
- PATENT ABSTRACTS OF JAPAN vol. 016, no. 342 (C-0966), 24 July 1992 (1992-07-24) -& JP 04 103634 A (HONDA MOTOR CO LTD), 6 April 1992 (1992-04-06)
- PATENT ABSTRACTS OF JAPAN vol. 009, no. 233 (C-304), 19 September 1985 (1985-09-19) -& JP 60 090223 A (UNITIKA KK), 21 May 1985 (1985-05-21)

## Description

The present invention relates to fiber for reinforcing rubber products, which is used as a reinforcing material for various rubber products such as rubber tires or rubber belts including timing belts.

It is common that reinforcing fiber to be used to increase the strength or durability of various rubber products such as rubber tires or rubber belts including timing belts, is coated with a coating film formed by a rubber type treating agent in order to increase the adhesion between the fiber and a rubber base material in a rubber product and in order to increase the durability of the rubber product by protecting the fiber itself. As such a rubber type treating agent, a treating agent comprising a condensate of resorcinol and formaldehyde, and a rubber latex, as the main components (hereinafter sometimes referred to as "RFL treating agent"), is known.

Particularly, a driving belt such as a timing belt to be used for an automobile engine is required to have durability under a severe condition such as a high temperature. Accordingly, the rubber as its base material and the reinforcing fiber are required to have heat resistance. Accordingly, as reinforcing fiber to be used for such a timing belt, fiber is known which is coated with a coating film formed by a RFL treating agent, having a highly heat resistant rubber latex, such as a halogen-containing polymer, incorporated.

For example, JP-A-1-221433 and JP-A-5-311577 disclose a RFL treating agent which comprises a resorcinol/formaldehyde resin, a butadiene/styrene/vinylpyridine terpolymer and a chlorosulfonated polyethylene.

Further, it is known that in order to increase the heat resistance of such a timing belt, a rubber composition containing a hydrogenated nitrile rubber (hereinafter sometimes referred to as "H-NBR") as the main component, is used as the base material, and the above-mentioned reinforcing fiber is required to have good adhesion to such a rubber composition containing H-NBR as the main component. As such a RFL treating agent, for example, JP-A-4-103634 discloses a RFL treating agent comprising a water-soluble condensate of resorcinol and formaldehyde, a latex of a vinylpyridine/styrene/butadiene terpolymer and a latex of an acrylonitrile/butadiene copolymer.

US-A-3,844,821 discloses a RFL treating agent comprising a water-soluble condensate of resorcinol and formaldehyde, a latex of vinylpyridine/styrene/butadiene terpolymer and a latex of an acrylonitrile/butadiene/styrene copolymer.

The above-mentioned conventional reinforcing fibers show fairly strong adhesion to a rubber composition containing chlorosulfonated polyethylene rubber as the main component, or a rubber composition containing H-NBR having a relatively low saturation degree as the main component and using sulfur mainly as a vulcanizing agent, among rubber compositions to be used as base materials for rubber products such as timing belts.

However, their adhesion is inadequate to a rubber composition containing heat resistant H-NBR having a high saturation degree as the main component and having a peroxide incorporated as a vulcanizer.

Accordingly, when the conventional reinforcing fibers and a rubber composition containing highly saturated H-NBR as the main component are combined, there has been a problem such that the heat resistance or bending fatigue resistance of the finally obtainable rubber product such as a timing belt, tends to be inadequate.

Further, in a case where the above-mentioned conventional reinforcing fibers are bonded to a H-NBR rubber composition, the adhesion tends to deteriorate in an environment where they are in contact with water, whereby there has been a problem that the water resistance of the finally obtainable rubber product such as a timing belt, tends to be poor.

Accordingly, the present invention has been made to solve such problems of the prior art, and its object is to provide fiber for reinforcing rubber products, which is suitable particularly for a timing belt for an automobile engine and which is capable of imparting excellent heat resistance and water resistance to such a timing belt.

To solve the above-mentioned problems, the fiber for reinforcing rubber products of the present invention, is fiber for reinforcing rubber products as defined in the claim, which comprises fiber coated with a coating film formed by a treating agent, wherein the treating agent comprises a rubber latex containing at least a vinylpyridine/styrene/butadiene terpolymer, a latex of an acrylonitrile/butadiene/styrene terpolymer, and a water-soluble condensate of resorcinol and formaldehyde.

According to the fiber for reinforcing rubber products of the present invention, the treating agent for forming the coating film to cover the reinforcing fiber, contains the latex of an acrylonitrile/butadiene/styrene terpolymer, whereby the fiber has excellent adhesion to a H-NBR rubber composition, particularly to a rubber composition containing highly saturated H-NBR as the main component and having a peroxide incorporated as a vulcanizer, and the adhesion will not deteriorate even in an environment where it is in contact with water. Thus, the fiber for reinforcing rubber products of the present invention is provided with both heat resistance and water resistance and is thus suitable as a reinforcing material for a timing belt for an automobile engine.

Further, in the fiber for reinforcing rubber products of the present invention, the latex of an acrylonitrile/butadiene/styrene terpolymer is a latex of the terpolymer wherein, when the total of the copolymerized ratios of the respective comonomers is 100 mass%, acrylonitrile is from 25 to 35 mass%, butadiene is from 30 to 40 mass%, and styrene is from 30 to 40 mass%.

By the use of the latex of an acrylonitrile/butadiene/styrene terpolymer having such copolymerized ratios of the comonomers, an effect will be obtained such that the coating film formed by such a treating agent, will have excellent heat resistance while maintaining excellent flexibility.

Further, in the fiber for reinforcing rubber products of the present invention, the treating agent preferably comprises, as calculated as solid contents, 100 parts by mass of the rubber latex containing at least a vinylpyridine/styrene/butadiene terpolymer, from 20 to 50 parts by mass of the latex of an acrylonitrile/butadiene/styrene terpolymer, and from 5 to 15 parts by mass of the water-soluble condensate of resorcinol and formaldehyde.

By adopting such proportions, the balance will be good between the adhesion of the reinforcing fiber to a rubber base material constituting a rubber product and the bending fatigue resistance of the finally obtainable timing belt or the like.

The fiber for reinforcing rubber products of the present invention has both excellent heat resistance and water resistance, whereby it is possible to substantially improve the durability at a high temperature or the durability against contact with water, of a rubber product such as a timing belt wherein such a fiber is used as a reinforcing material.

Now, the present invention will be described in detail. In the following description "parts" means "parts by mass", and "%" means "% by mass", unless otherwise specified.

Firstly, the treating agent (hereinafter referred to as the first treating agent) comprising the rubber latex containing at least a vinylpyridine/styrene/butadiene terpolymer (hereinafter referred to also simply as the rubber latex), the latex of an acrylonitrile/butadiene/styrene terpolymer and the water-soluble condensate of resorcinol and formaldehyde, will be described.

As the vinylpyridine/styrene/butadiene terpolymer latex (hereinafter referred to also as the vinylpyridine latex) to be incorporated in the first treating agent, one which is commonly used for the treatment of fiber for reinforcing rubber products may be used.

Among them, it is preferred to use a latex of a vinylpyridine/styrene/butadiene terpolymer wherein, when the total of the copolymerized ratios of the respective comonomers is 100 mass%, vinylpyridine is from 10 to 20 mass%, styrene is from 10 to 20 mass% and butadiene is from 60 to 80 mass%. As such a vinylpyridine latex, Nipol-2518FS (tradename, manufactured by ZEON CORPORATION) or Pyratex (tradename, manufactured by NIPPON A&L INC.) may, for example, be suitably used.

Further, as the rubber latex of the present invention containing at least such a vinylpyridine latex, the above-mentioned vinylpyridine latex may be used alone, or the vinylpyridine latex and a rubber latex other than the acrylonitrile/butadiene/styrene terpolymer latex (hereinafter referred to as "another rubber latex") may be used in combination.

As such another rubber latex, a latex of a rubber having remaining double bonds (i.e. an unsaturated rubber) or a latex of a halogen-containing polymer is preferably used. As the latex of a rubber having remaining double bonds, a latex of an acrylate type polymer, a latex of a styrene/butadiene copolymer, a latex of a carboxyl-modified styrene/butadiene copolymer, or a latex of a polybutadiene, may, for example, be mentioned. As the latex of a halogen-containing polymer, a latex obtained from a halogen-containing polymer such as chlorinated rubber, chloroprene rubber or chlorosulfonated polyethylene, may, for example, be mentioned.

Further, the latex of an acrylonitrile/butadiene/styrene terpolymer (hereinafter referred to also as "ABS latex") to be incorporated to the first treating agent, is a latex of a terpolymer wherein, when the total of the copolymerized ratios of the respective comonomers is 100 mass%, acrylonitrile is from 25 to 35 mass%, butadiene is from 30 to 40 mass%, and styrene is from 30 to 40 mass%. As such an ABS latex, Nipol-1577 (tradename, manufactured by ZEON CORPORATION) may, for example, be suitably used.

Further, as the water-soluble condensate of resorcinol and formaldehyde (hereinafter referred to also as "the RF condensate") to be incorporated in the first treating agent, it is possible to use a water-soluble addition condensate rich in oxymethyl groups, which is obtained by reacting resorcinol and formaldehyde in the presence of an alkaline catalyst such as an alkali metal hydroxide, ammonia or an amine. Particularly preferred is a RF condensate obtained by reacting resorcinol and formaldehyde in a molar ratio of 1:0.3 to 2.5.

To the first treating agent, the same additives as commonly used in conventional RFL treating agents, such as an anti-aging agent and a stabilizer, may be incorporated in addition to the rubber latex, the ABS latex and the RF condensate, as the case requires.

As the anti-aging agent, a liquid emulsified product of a mineral oil may, for example, be mentioned, and as the stabilizer, aqueous ammonia or an aqueous sodium hydroxide solution may, for example, be mentioned.

The first treating agent in the present invention can be obtained by uniformly mixing the components such as the rubber latex, the ABS latex, the RF condensate and the additives which are incorporated as the case requires, with water as a dispersant, in accordance with a usual method.

In such a first treating agent, the ABS latex is incorporated in a proportion of from 20 to 50 parts, per 100 parts of the rubber latex, as calculated as solid contents.

If the proportion of the ABS latex is less than 15 parts, the adhesion, to a H-NBR composition of the obtainable reinforcing fiber tends to be inadequate, and the heat resistance or water resistance of the finally obtainable timing belt tends to be poor. Further, the proportion of the rubber latex relatively increases, whereby tackiness of the obtained reinforcing fiber tends to be too high, whereby a trouble may be caused in its production.

On the other hand, if the proportion of the ABS latex exceeds 70 parts, the coating film to be formed by the first treating agent, tends to be hard whereby the flexibility of the rubber reinforcing fiber thereby obtained, tends to be low, and the bending fatigue resistance of the finally obtainable timing belt, tends to be inadequate.

Further, in a case where the vinylpyridine latex and another rubber latex are incorporated in the first treating agent, a part of the blend amount of the vinylpyridine latex is replaced by another latex so that the total of the vinylpyridine latex and another latex will be 100 parts. The proportions of the two are preferably such that, as solid contents, the vinylpyridine latex is from 70 to 95 parts, while another rubber latex is from 30 to 5 parts.

Further, in the first treating agent, the RF condensate is incorporated in a proportion of from 5 to 15 parts, per 100 parts of the rubber latex, as calculated as solid contents. If the proportion of the RF condensate is less than 2 parts, the adhesion of the reinforcing fiber to the rubber base material constituting a rubber product such as a timing belt, tends to be inadequate, and if the proportion of the RF condensate exceeds 25 parts, the finally obtainable timing belt may sometimes be poor in the bending fatigue resistance. When the RF condensate is incorporated in a proportion of from 5 to 15 parts, the balance between the adhesion and the heat resistance of the reinforcing fiber and the bending fatigue resistance of the timing belt will be good.

Still further, the concentration of the first treating agent, i.e., the total content of components in the first treating agent including the rubber latex, the ABS latex, the RF condensate and additives which may be incorporated, as the case requires, is preferably from 10 to 50%, more preferably from 20 to 40%, as solid contents. If such a concentration is less than 10%, it may sometimes become difficult to impregnate the fiber with a sufficient amount of the first treating agent, and if it exceeds 50%, the stability of the first treating agent tends to be poor, and gelation may be likely to take place.

The fiber to be used in the present invention is not particularly limited, and it may be either inorganic fiber or organic fiber which is commonly used in a conventional rubber-reinforcing fiber. As the inorganic fiber, glass fiber or carbon fiber may be used, and as the organic fiber, aramid fiber, PBO (polyparaphenylenebenzoxazole) fiber, PET (polyethylene terephthalate) fiber or PEN (polyethylene naphthalate) fiber may, for example, be used. To'such fibers, it is preferred to preliminarily apply a binding agent or a sizing agent, prior to being coated with the first treating agent, in order to improve the adhesive between the fiber itself and the coating film formed by the first treating agent.

Among the above fibers, it is preferred to use glass fiber in view of the wide applicability, the cost and easy application to the process for producing timing belts. As such glass fiber, one obtained by bundling from 200 to 600 glass monofilaments having a diameter of from 7 to 9 µm, may, for example, be employed. Further, the composition of the glass fiber is not particularly limited, and E glass or S glass may, for example, be mentioned. Further, in the case of glass fiber, it is preferably subjected to pretreatment with a binding agent containing e.g. a known silane coupling agent or coating film-forming agent.

The fiber for reinforcing rubber products of the present invention is one having the above-described fiber coated with a coating film (hereinafter referred to also as "the first coating film") formed by the above first treating agent. However, in order to further increase the adhesion with a rubber composition which will be the base material for a rubber product such as a tire or a rubber belt including a timing belt, it is preferred that the first coating film is further covered by a coating film (hereinafter referred to also as "the second coating film") formed by the following second treating agent.

As a first example of such a second treating agent (hereinafter referred to as the first example), a treating agent containing a rubber, a vulcanizer and an inorganic filler, may be mentioned. For example, it is possible to employ the treating agent disclosed in e.g. JP-A-63-126975 or JP-A-11-241275.

As the rubber to be incorporated in the above first example, a halogen-containing polymer or a hydrated nitrile rubber may be mentioned. As such a halogen-containing polymer, chlorinated rubber, chloroprene rubber, chlorinated polyethylene, chlorinated ethylene/propylene copolymer, chlorinated polyvinyl chloride or chlorosulfonated polyethylene may, for example, be used. Among them, it is particularly preferred to use chlorosulfonated polyethylene.

Further, as the vulcanizer, a polynitroso aromatic compound or a benzoquinone may, for example, be used. As the polynitroso aromatic compound, p-dinitrosobenzene or poly p-dinitrosobenzene may, for example, be mentioned. The benzoquinone may, for example, be tetrachlorobenzoquinone, p-, p'-dibenzoylbenzoquinone dioxime or p-benzoquinone dioxime. Among them, it is preferred to use poly p-dinitrosobenzene, tetrachlorobenzoquinone, p-, p'-dibenzoylbenzoquinone dioxime or p-benzoquinone dioxime.

As the inorganic filler, one commonly used as a filler for a rubber composition, such as silica or carbon black, may be used.

Further, in the above first example, an isocyanate or an additive may be incorporated, as the case requires, in addition to the above-described components.

As the isocyanate, methylenediphenyl isocyanate (MDI), toluene diisocyanate (TDI), triphenylmethane triisocyanate or naphthalene diisocyanate (NDI) may, for example, be used. An isocyanate monomer is highly volatile and is not preferred from the viewpoint of the safety and the handling efficiency, and it is preferred to use a polyisocyanate such as a dimer, which has a relatively small molecular weight and which is rich in reactivity. Such a polyisocyanate is preferably one having a polymerization degree of from 2 to 10. Further, as the additive, a softening agent, an anti-aging agent or a vulcanization accelerator may, for example, be mentioned.

The above first example can be obtained by dissolving the respective components by mixing the rubber, the vulcanizer, the inorganic filler, and the isocyanate and the additive which may be incorporated, as the case requires, with an organic solvent, by a usual method. As such an organic solvent, one commonly used in a conventional rubber cement may be employed. For example, xylene, toluene or methyl ethyl ketone may be mentioned.

In a case where an isocyanate is incorporated to the above first example, the proportion of the isocyanate to the rubber is preferably 100:10 to 100, by mass ratio. If the proportion of the isocyanate is larger than the above range, the heat resistance or the bending fatigue resistance, of the reinforcing fiber thereby obtainable tends to deteriorate, and if the proportion of the isocyanate is smaller than the above range, the adhesion of the obtained reinforcing fiber to the rubber composition may sometimes deteriorate.

Further, in the above first example, the proportion of the sum of the rubber and the isocyanate is preferably from 3 to 15%, more preferably from 5 to 10%, based on the entirety including the organic solvent. If the proportion of both is less than 3%, it sometimes tends to be difficult to coat the fiber with a sufficient amount of the second treating agent, and if it exceeds 15%, the viscosity of the second treating agent tends to be too high, and non-uniformity may sometimes result when it is coated on glass fiber.

Further, in the above first example, the proportion of the vulcanizer is preferably from 0.3 to 2%, more preferably from 0.6 to 1%, based on the entirety including the organic solvent. Likewise, the proportion of the inorganic filler is preferably from 0.5 to 5%, more preferably from 1 to 3%. If the proportion of the vulcanizer is less than 0.3%, the function as the vulcanizer tends to be inadequate, and peeling may sometimes be likely to take,place between the first coating film and the second coating film of the reinforcing fiber thereby obtained, and if it exceeds 2%, peeling may sometimes be likely to take place between the reinforcing fiber and the base material rubber of the finally obtainable rubber product.

The above-described first example is to increase the adhesion between the reinforcing fiber and the rubber composition as the base material for a rubber product. However, in the timing belt to be used for an automobile engine, a rubber composition comprising as the main component H-NBR having high heat resistance, is often used as the base material. In the above-described first example, the adhesion may sometimes be inadequate to a rubber composition comprising a highly saturated H-NBR as the main component wherein a peroxide is incorporated as a vulcanizer, which is employed as the base material to increase the heat resistance of a timing belt.

Accordingly, in a case where a rubber composition comprising highly saturated H-NBR as the main component, is used as the base material for a timing belt or the like, the second treating agent is preferably made of a composition of the following second example (hereinafter referred to also as the second example), in order to make the adhesion with the rubber composition to be satisfactory. Such a second example is preferred also from the viewpoint that the affinity is good between the second coating film thereby formed and the fist coating film formed by the first treating agent.

As such a second example, a treating agent comprising an uncured phenol resin and a rubber, may be mentioned. The treating agent of such a second example may be obtained by mixing the uncured phenol resin and the rubber with a solvent in accordance with a usual method.

Such an uncured phenol resin to be used in the second example is one which is uncured among resins obtainable from a phenol and an aldehyde, i.e. one having a reactivity for curing. As such an uncured phenol resin, novolak and/or resol may preferably be mentioned. It is preferred to use novolak from the viewpoint such that the adhesion between H-NBR and the obtainable reinforcing fiber, can be increased, and it is preferred to use resol from such a viewpoint that the adhesion state at the interface between the first coating film and the second coating film can be made satisfactory. Further, in order to obtain both of such merits, it is preferred to use them in a ratio of novolak/resol being preferably from 10/4 to 10/1, as the solid contents.

As the rubber in the above second example, it is preferred to use rubber having a good affinity with the rubber composition, taking into consideration the compatibility with the rubber composition which will be the base material of a rubber product to be reinforced, such as a timing belt. As a preferred example, chloroprene rubber, chlorosufonated polyethylene, acrylonitrile/butadiene copolymer rubber (so-called "NBR"), or H-NBR may, for example, be mentioned. Among them, it is preferred to use an acrylonitrile/butadiene copolymer rubber in that the adhesion with H-NBR can be made satisfactory, and the flexibility of the second coating film formed by the second treating agent can be made satisfactory.

Further, in the second example, it is preferred to incorporate an uncured epoxy resin in addition to the above-mentioned uncured phenol resin and rubber, in that the adhesion between H-NBR and the obtained reinforcing fiber can be made satisfactory, and the good adhesion can be maintained even during heating.

Such an uncured epoxy resin is one which is not yet cured among epoxy resins, i.e. one having reactivity for curing. As such an epoxy resin, preferably, a bisphenol A type epoxy resin, a bisphenol F type epoxy resin, a phenol novolak type epoxy resin, or a cresol novolak type epoxy resin may, for example, be mentioned. Among them, a bisphenol A type epoxy resin is preferred, since the adhesion with H-NBR is particularly high.

The proportions of the uncured phenol resin and the rubber in the above second example, are such that the rubber is preferably from 10 to 60 parts, particularly preferably from 30 to 40 parts, per 100 parts of the uncured phenol resin. If the proportion of the rubber is less than 10 parts, the flexibility of the second coating film formed by the second treating agent may sometimes become poor. On the other hand, if it exceeds 60 parts, an adverse effect may sometimes be brought about to the adhesion between the fiber and the rubber composition as the base material for a rubber product.

Further, in a case where uncured epoxy resin is incorporated, the uncured epoxy resin is preferably from 2 to 20 parts, particularly preferably from 5 to 10 parts, per 100 parts of the uncured phenol resin. If the proportion of the epoxy resin is less than 2 parts, no adequate effect for improving the adhesion between the fiber and the rubber composition as the base material for a rubber product tends to be obtained. On the other hand, if it exceeds 20 parts, the flexibility of the second coating film formed by the second treating agent may sometimes become poor. Here, the above-mentioned proportions of the respective components are proportions as solid contents.

In the above second example, in addition to the above-described components, an inorganic filler or an additive may be incorporated, as the case requires. As such an inorganic filler, one which is common as a filler for a rubber composition, such as silica or carbon black, may be employed. As the additive, a softening agent, an anti-aging agent or a vulcanization accelerator which is common as an additive for a rubber composition, may be used.

Further, as a solvent to dissolve or disperse the above-mentioned respective components in the treating agent of the above second example, one or a combination of two or more may be used among those which are commonly used for conventional rubber cement, but it is preferred to use a solvent of a ketone type or an ester type. As a preferred example, methyl ethyl ketone (MEK), methyl isobutyl ketone (MIBK) or ethyl acetate, may, for example, be mentioned.

Further, the concentration of the above second example, i.e. the total content of components including the uncured phenol resin, the rubber, and the uncured epoxy resin, the inorganic filler or the additive, which may be incorporated as the case requires, is preferably from 3 to 20%, particularly preferably from 5 to 15%, as solid contents. If such a concentration is less than 3%, it may sometimes become difficult to coat the fiber with a sufficient amount of the second treating agent. On the other hand, if it exceeds 20%, the stability of the second treating agent may sometimes deteriorate.

The fiber for reinforcing rubber products of the present invention may be such that after coated with the second coating film like the above first example and the second example, the second coating film may further be coated with a third coating film formed by a third treating agent, as disclosed in JP-A-3-269177 or JP-A-7-190149.

Now, the process for producing the fiber for reinforcing rubber products of the present invention will be described.

Firstly, fiber to be coated is continuously immersed in a bath filled with the first treating agent to have the first treating agent deposited and impregnated on the fiber. Then, the fiber is continuously heated in e.g. a hot air oven of from 200 to 350°C to dry and solidify the first treating agent to form a first coating film thereby to obtain coated fiber having the first coating film.

Here, the deposited amount of the first coating film to the coated fiber is preferably from 12 to 25%, more preferably from 16 to 22%, as solid content, based on the mass of the coated fiber. If the deposited amount is less than 12%, individual monofilaments of the coated fiber tend to be hardly adequately covered by the first coating film, and the monofilaments are likely to contact one another and tend to be abraded by friction, so that the resistant to fatigue from flexing of the finally obtainable timing belts, etc., tends to be poor, such being undesirable. On the other hand, if the deposited amount exceeds 25%, the flexibility of the coating film tends to be poor, and the bending fatigue resistance of the finally obtainable rubber belts, etc., likely tends to be low, such being undesirable.

Then, the above coated fibers are, individually or in combination of a plurality of them, subjected to primary twisting by a twisting machine such as a ring twisting machine to obtain a primary twisted yarn. The number of twists in this primary twisting step is preferably from 0.5 to 4 twists/25 mm. Otherwise, the coated fiber once taken up in a non-twisted state, may be subjected to primary twisting to obtain a primary twisted yarn, or a take-up apparatus in the above step of obtaining a coated fiber is modified to be a twisting machine, so that a step of obtaining a coated fiber and a primary twisting step may be carried out simultaneously to obtain a primary twisted yarn.

Then, from 5 to 20 primary twisted yarns are put together and subjected to second twisting by means of a twisting machine such as a ring twisting machine or a flier twisting machine to obtain a second twisted yarn, thereby to obtain the fiber for reinforcing rubber products of the present invention. The number of twists in this second twisting step is preferably from 0.5 to 4 twists/25 mm, and like in the conventional fiber for reinforcing rubber products, the twisting direction in the second twisting step is adjusted to be opposite to the twisting direction in the primary twisting step.

Further, in a case of covering by the second coating film formed by the second treating agent, in addition to the above step, treatment by the following step is applied to the second twisted yarn. Namely, the above-mentioned second twisted yarn is continuously immersed in a bath filled with the above-described second treating agent, or the second treating agent is sprayed or coated on the surface of the above-mentioned second twisted yarn to have the second treating agent applied to the second twisted yarn. Then, the second twisted yarn is continuously heated in e.g. a hot air oven of from 120 to 200°C to dry and solidify the second treating agent to form a second coating film thereby to obtain the fiber for reinforcing rubber products of the present invention.

At that time, the deposited amount of the second coating film to the reinforcing fiber is preferably from 1 to 15%, particularly preferably from 3 to 10%, as solid content, based on the mass of the reinforcing fiber. If the deposited amount is less than 1%, the effect for increasing the adhesion between the reinforcing fiber and the rubber composition as the base material for rubber products is likely to be inadequate. Even if the deposited amount exceeds 15%, the effect for increasing the adhesion will not increase so much, and the adhesion may rather be hindered.

Now, the present invention will be described in further detail with reference to Examples. However, it should be understood that the present invention is by no means restricted to such specific Examples.

### EXAMPLE 1

100 Parts of a vinylpyridine latex ("Pyratex", tradename, manufactured by NIPPON A&L INC.), 30 parts of an ABS latex ("Nipol 1577", tradename, manufactured by ZEON CORPORATION), 6.8 parts of a RF condensate (solid content: 7%) and deionized water, were mixed to obtain a first treating agent having a concentration of 31%. Here, the above ratio of each component is a mass ratio as solid content.

200 Glass monofilaments made of non alkali glass (E glass) and having a diameter of 9 µm, were bundled while applying a binding agent containing an amino silane coupling agent as the main component, followed by drying to obtain a glass fiber. Three such glass fibers drawn together were continuously immersed in a bath filled with the above-mentioned first treating agent to have the first treating agent deposited and impregnated on the glass fibers.

Then, the glass fibers were continuously heated for one minute in a hot air oven at a temperature of 250°C to dry and solidify the first treating agent, to obtain coated glass fibers having a first coating film. Here, the deposited amount of the first coating film was 18% as solid content based on the mass of the coated glass fibers.

Further, the above coated glass fibers were individually subjected to primary twisting by means of a ring twisting machine so that the number of twists became 2 twists/25 mm to obtain primary twisted yarns. Then, 11 such primary twisted yarns drawn together, were subjected to second twisting by means of a separate ring twisting machine in a twisting direction opposite to the primary twisting so that the number of twists became 2 twists/25 mm, to obtain a second twisted yarn.

Then, 60 parts of a novolak and 40 parts of resol as an uncured phenol resin, 35 parts of an acrylonitrile/butadiene copolymer rubber as a rubber, 7 parts of a bisphenol A type epoxy resin as an uncured epoxy resin, and a solvent wherein methyl isobutyl ketone, methyl ethyl ketone and ethyl acetate were mixed by mass ratio of 8:4:1, were mixed to obtain a second treating agent having a concentration of 10%. Here, the above ratio of each component is a mass ratio as solid content.

The second twisted yarns obtained as described above, were continuously immersed in a bath filled with the above-mentioned second treating agent to have the second treating agent coated and deposited on the second twisted yarns. Then, the second twisted yarns were continuously heated for one minute in a hot air oven at a temperature of 130°C to dry and solidify the second treating agent to form a second coating film thereby to obtain the fiber for reinforcing rubber products of the present invention. Here, the deposited amount of the second coating film was 6% as solid content based on the mass of the reinforcing fiber.

### COMPARATIVE EXAMPLE 1

79.4 Parts of a vinylpyridine latex ("Pyratex", tradename, manufactured by NIPPON A&L INC.), 20.6 parts of a latex of a styrene/butadiene copolymer ("NIPOL2570X5", tradename, manufactured by ZEON CORPORATION), 11.1 parts of a latex of a chlorosulfonated polyethylene ("CSM450", tradename, manufactured by SUMITOMO SEIKA CHEMICAL CO., LTD.), 5.9 parts of a RF condensate (solid content: 7%) and deionized water, were mixed to obtain a first treating agent having a concentration of 30%. Here, the above ratio of each component is a mass ratio as solid content.

The fiber for reinforcing rubber products in Comparative Example 1 was obtained by using the same glass fiber and second treating agent as used in Example 1 by the process under the same conditions as in Example 1 except that the above first treating agent was employed.

### COMPARATIVE EXAMPLE 2

100 Parts of a vinylpyridine latex ("Pyratex", tradename, manufactured by NIPPON A&L INC.), 44 parts of a latex of an acrylonitrile/butadiene copolymer ("Nipol 1562", tradename, manufactured by ZEON CORPORATION), 7.5 parts of a RF condensate (solid content: 7%) and deionized water, were mixed to obtain a first treating agent having a concentration of 31%. Here, the above ratio of each component is a mass ratio as solid content.

The fiber for reinforcing rubber products in Comparative Example 2 was obtained by using the same glass fiber and the same second treating agent as used in Example 1 by the process under the same conditions as in Example 1, except that the above first treating agent was employed.

### TEST EXAMPLES

With respect to the respective fibers for reinforcing rubber products obtained in the above Example 1 and Comparative Examples 1 and 2, the evaluation of the adhesion in the normal condition and the adhesion after boiling, were carried out by the following methods, with respect to rubber products using a rubber composition having the following composition, as the base material. The results are shown in Table 1.

Blend Ratio of Rubber Composition

Hydrogenated nitrile rubber (Zetpol 2000, tradename, manufactured by ZEON CORPORATION): 100 parts, zinc oxide: 10 parts, zinc methacrylate: 15 parts, a zinc salt of 2-mercaptobenzimidazole: 1 part, substituted diphenylamine: 1 part, carbon black (HAF): 3 parts, silica hydrate: 30 parts, dicumyl peroxide: 10 parts, 1,3-bis(t-butylperoxyisoproypyl)benzene: 5 parts, sulfur: 0.3 part, TMTD (tetramethylthiuram disulfide): 1 part, MBT (2-mercaptobenzothiazole): 0.5 part.

Method for Evaluating the Adhesion in the Normal Condition

On a rubber sheet having a thickness of 3 mm, a width of 25 mm and a length of 100 mm, obtained by processing the above-mentioned rubber composition, reinforcing fibers were arranged along the lengthwise direction without space. Then, the same rubber sheet as mentioned above, was placed, so that the reinforcing fibers were sandwiched between the upper and lower rubber sheets. This assembly was heated and pressed by means of a heat pressing apparatus at a temperature of 170°C under a pressure of 18.3 kPa for 20 minutes, to obtain a test specimen.

With respect to this test specimen, peeling between the reinforcing fiber and the rubber sheet was carried out at a tensile speed of 50 mm/min by means of an autograph, whereby the adhesive strength between the reinforcing fiber and the rubber sheet was measured, and it was used as an index to evaluate the adhesive in the normal condition.

Method for Evaluating the Adhesion After Boiling

A test specimen prepared in the same manner as in the Method for Evaluating the Adhesion in the Normal Condition, was put into boiling water and boiled for 5 hours. Then, it was wiped with a cloth to remove the moisture, and the adhesive strength was measured in the same manner as in the Method for Evaluating the Adhesion in the Normal Condition. A value obtained by dividing the adhesive strength after boiling by the adhesive strength in normal condition, was converted to a percentage, which was taken as the retention and was used as an index to evaluate the water resistance.

**TABLE 1**

| | Ex. 1 | Comp. Ex. 1 | Comp. Ex. 2 |
|---|---|---|---|
| Adhesive strength in normal condition (N/25 mm) | 255 | 211 | 251 |
| Adhesive strength after boiling (N/25 mm) | 250 | 195 | 226 |
| Retention (%) | 98 | 92 | 90 |

As is evident from Table 1, as compared with Comparative Examples 1 and 2, the rubber product in Example 1 using the reinforcing fiber of the present invention has high adhesive strength in the normal condition, and also has high adhesive strength retention after boiling. Accordingly, in the fiber for reinforcing rubber products of the present invention, the adhesion with the rubber composition containing highly saturated H-NBR as the main component is excellent, and the obtained rubber product is also excellent in water resistance.

The fiber for reinforcing rubber products of the present invention has both excellent heat resistance and water resistance. Accordingly, it is useful for a rubber product such as a timing belt wherein such a reinforcing fiber is used as a reinforcing material.

## Claims

1. Fiber for reinforcing rubber products, which comprises fiber coated with a coating film formed by a treating agent, wherein the treating agent comprises as calculated as solid contents, a rubber latex containing
(i) 100 parts by mass of a vinylpyridine/styrene/butadiene terpolymer,
(ii) from 20 to 50 parts by mass of a latex of an acrylonitrile/butadiene/styrene terpolymer, and
(iii) from 5 to 15 parts by mass of a water-soluble condensate of resorcinol and formaldehyde,
and when the total of the copolymerized ratios of the respective comonomers of the acrylonitrile/butadiene/styrene terpolymer is 100 mass%, acrylonitrile is from 25 to 35 mass%, butadiene is from 30 to 40 mass%, and styrene is from 30 to 40 mass%.

## Patentansprüche

1. Faser zum Verstärken von Gummimaterialien, umfassend eine mit einem durch ein Behandlungsmittel ausgebildeten Beschichtungsfilm beschichtete Faser, worin das Behandlungsmittel, berechnet als Feststoffgehalte, einen Kautschuklatex umfasst, enthaltend
(i) 100 Massen-Teile eines Vinylpyridin/Styrol/Butadien-Terpolymers,
(ii) 20 bis 50 Massen-Teile eines Latex aus einem Acrylnitril/Butadien/Styrol-Terpolmyer, und
(iii) 5 bis 15 Massen-Teile eines wasserlöslichen Kondensats aus Resorcin und Formaldehyd,
und, wenn die Gesamtheit der copolymerisierten Verhältnisse der entsprechenden Comonomeren des Acrylnitril/Butadien/Styrol-Terpolymers 100 Massen-% ist, Acrylnitril 25 bis 35 Massen-%, Butadien 30 bis 40 Massen-% und Styrol 30 bis 40 Massen-%, beträgt.

## Revendications

1. Fibre pour renforcer des produits en caoutchouc, qui comprend une fibre pourvue d'un film de revêtement formé par un agent de traitement, dans laquelle l'agent de traitement comprend, exprimées en teneurs en solides, un latex de caoutchouc contenant
(i) 100 parties en masse d'un terpolymère de vinylpyridine/styrène/butadiène,
(ii) 20 à 50 parties en masse d'un latex d'un terpolymère d'acrylonitrile/ butadiène/styrène, et
(iii) 5 à 15 parties en masse d'un produit de condensation hydrosoluble de résorcinol et de formaldéhyde,
et quand le total des taux de copolymérisation des comonomères respectifs du terpolymère d'acrylonitrile/butadiène/styrène est de 100% en masse, l'acrylonitrile représente 25 à 35% en masse, le butadiène 30 à 40% en masse et le styrène 30 à 40% en masse.
